# EUROPÄISCHE PATENTSCHRIFT

(11) **EP 2 656 708 B1**
(45) Veröffentlichungstag und Bekanntmachung des Hinweises auf die Patenterteilung: **02.11.2016**
(21) Anmeldenummer: 13164771.1
(22) Anmeldetag: 22.04.2013
(51) Int. Cl.: A01B 35/24, A01B 61/04

(54) **Zinkenstriegel**
Harrow
Herse à pointes

(30) Priorität: 28.04.2012 DE 202012004337 U
(43) Veröffentlichungstag der Anmeldung: 30.10.2013
(73) Patentinhaber: Treffler, Paul, 86554 Pöttmes-Echsheim (DE)
(72) Erfinder: Treffler, Paul, 86554 Pöttmes-Echsheim (DE)
(74) Vertreter: Charrier Rapp & Liebau

(56) Entgegenhaltungen:
- EP-A1- 1 961 283
- DE-A1- 10 007 156
- FR-A1- 2 379 974
- GB-A- 2 118 414
- US-A- 5 431 232
- US-A- 5 787 992

## Beschreibung

Die Erfindung betrifft einen Zinkenstriegel, insbesondere zur Pflege von Bodenflächen zwischen Kulturpflanzen, nach dem Oberbegriff des Anspruchs 1.

Ein derartiger Zinkenstriegel ist aus der DE 201 15 048 oder aus der EP 1 961 283 A1 bekannt. Dieser weist mehrere an einem Traggestell verschwenkbar angeordnete Striegelzinken auf, die durch jeweils eine Feder vorgespannt sind. Die Federn sind einerseits mit den jeweiligen Striegelzinken und andererseits über ein Zugseil mit einem am Tragrahmen angeordneten Stellelement verbunden. An dem Stellelement sind fünf unterschiedliche Befestigungsmöglichkeiten für die mit den Federn verbundenen Zugseile vorgesehen, so dass durch Veränderung der Stellung der Befestigungspunkte der Zugseile am Stellrad die Vorspannung der Federn und damit die Vorspannung der Striegelzinken zentral eingestellt werden kann. Bei diesem bekannten Zinkenstriegel werden zur Vorspannung der Striegelzinken übliche Schraubenfedern mit einer fest vorgegebenen Federcharakteristik eingesetzt. Durch die Federauswahl wird der Einsatzbereich jedoch festgelegt, so dass bei geänderten Einsatzbedingungen ggf. auch die Federn gewechselt werden müssen.

In der GB 2 118 414 A ist ein Sämaschine offenbart, bei der ein Scharbalken mit einer Säschar und zwei rohrförmigen Aufnahmen für das Saatguts um einen Querstift verschwenkbar an einem Träger angeordnet ist. Der Scharbalken wird durch eine Federanordnung mit zwei zueinander koaxialen Druckfedern in Richtung des Bodens gedrückt.

Aufgabe der Erfindung ist es, einen Zinkenstriegel der eingangs genannten Art zu schaffen, bei dem die Vorspannfeder eine verbesserte Dämpfungsfunktion aufweist.

Diese Aufgabe wird durch einen Zinkenstriegel mit den Merkmalen des Anspruchs 1 gelöst. Zweckmäßige Weiterbildungen und vorteilhafte Ausführungsformen der Erfindung sind Gegenstand der Unteransprüche.

Bei dem erfindungsgemäßen Zinkenstriegel umfasst die Vorspannfeder zwei zusammengehörende Federn, die so hintereinandergeschaltet sind, dass beim Beginn der Auslenkung des Striegelzinkens zunächst die erste Feder und erst nach einer bestimmten größeren Auslenkung des Striegelzinkens die zweite Feder zur Wirkung gelangt. Die erste Feder ist als Schraubendruckfeder und die zweite Feder als koaxial um die erste Feder angeordnete Schraubenzugfeder ausgebildet. Dadurch ist eine besonders kompakte und platzsparende Bauweise erreichbar. In einem ersten Auslenkungsbereich der Striegelzinken kann über die erste Feder mit einem Zinkendruckbereich von z.B. 200g bis 600g eine Unkrautbekämpfung im frühen Wachstumsstadium durchgeführt werden, während bei härteren Böden oder größeren Widerständen die einen höheren Zinkendruck bis z.B. 5000g ermöglichende zweite Feder zum Einsatz gelangt. Dadurch ist ein Austausch bzw. eine Auswahl der Federn für die unterschiedlichen Verhältnisse nicht mehr erforderlich.

Die erste Feder ist zweckmäßigerweise mit einer geringeren Federsteifigkeit und die zweite Feder mit einer größeren Federsteifigkeit ausgebildet.

Die erste Feder ist vorzugsweise zwischen einem an der zweiten Feder festgelegten ersten Führungsstück und einem gegenüber der zweiten Feder beweglichen zweiten Führungsstück eingespannt ist. Zur Festlegung des ersten Führungsstücks an der zweiten Feder kann diese ein konisch geformtes Ende zur Anlage einer konischen Anlagefläche des ersten Führungsstücks enthalten.

Die zweite Feder kann an ihrer einen Seite ein als Öse gebogenes Ende zur Verbindung mit dem Striegelzinken aufweisen. Das zweite Führungsstück ist vorzugsweise mit einem Zugseil zur Vorspannung verbunden. Die beiden Führungsstücke weisen in vorteilhafter Weise jeweils eine Durchgangsöffnung für das Zugseil auf, wobei das Zugseil an seinem durch die Durchgangsöffnung des zweiten Führungsstücks ragenden freien Ende eine Verdickung zur Halterung des Zugseils am Führungsstück enthält.

Das Zugseil kann über eine elektrisch, pneumatisch oder hydraulisch angetriebene Verstellwelle geführt sein. Die zentrale Veränderung der Vorspannung der Striegelzinken bzw. die Einstellung des Zinkendruckes kann somit z.B. vom Schleppfahrzeug aus auch während der Bearbeitung erfolgen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen Zinkenstriegel in einer Seitenansicht mit mehreren Striegelzinken in unterschiedlichen Auslenkstellungen;
- **Figur 2**: eine Vorspannfeder in einer Vorspannstellung bei nicht ausgelenkten Striegelzinken;
- **Figur 3**: die Vorspannfeder von Figur 1 in einer ersten Auslenkstellung der Striegelzinken und
- **Figur 4**: die Vorspannfeder von Figur 1 in einer zweiten Auslenkstellung.

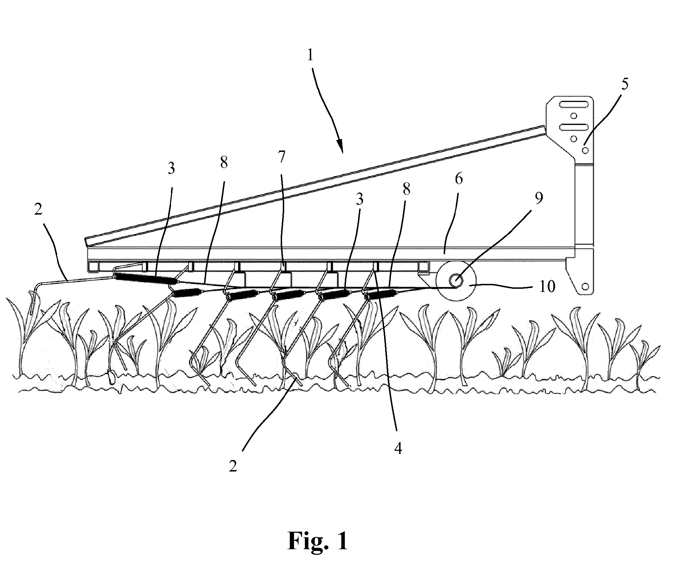

Bei dem in Figur 1 in einer Seitenansicht dargestellten Bodenbearbeitungsgerät handelt es sich um einen so genannten Zinkenstriegel, der im landwirtschaftlichen Ackerbau für die Boden- und Saatbearbeitung von Kulturpflanzungen, insbesondere zur Unkrautbekämpfung im ökologischen Pflanzenbau, eingesetzt wird. Er enthält mehrere an einem Traggestell 1 verschwenkbar angeordnete Striegelzinken 2, die durch jeweils eine Vorspannfeder 3 gegen einen festen Anschlag 4 vorgespannt sind. Das Traggestell 1 weist an seinem in Figur 1 rechten Ende einen Dreipunktbock 5 auf, über den das Traggestell 1 an einem Schleppfahrzeug befestigt werden kann. Das Traggestell 1 enthält mehrere voneinander beabstandete Längsträger 6 und Querstreben 7, an denen die an der Unterseite in Fahrtrichtung abgewinkelten Striegelzinken 2 in Längs- und Querrichtung voneinander beabstandet angelenkt sind.

Zur Vorspannung der Striegelzinken 2 ist das eine Ende der Vorspannfedern 3 an der Striegelzinke 2 unterhalb ihrer Anlenkung befestigt, während das andere Ende der Vorspannfedern 3 über je ein Zugseil 8 mit einer am Tragrahmen 1 drehbar angeordneten Verstellwelle 9 verbunden ist. Durch Drehung der Verstellwelle 9 kann so eine zentrale Verstellung der Vorspannung der Striegelzinken 2 erreicht werden. Die Drehung der Verstellwelle 9 kann mechanisch oder elektrisch über einen Stellmotor 10 erfolgen. Der Stellmotors 10 kann z.B. über ein im Schleppfahrzeug angebrachtes Steuergerät angesteuert werden, das mit einem Monitor oder einer anderen elektronischen Anzeigeeinrichtung versehen ist. Die Einstellung der Vorspannung kann aber auch hydraulisch oder pneumatisch erfolgen.

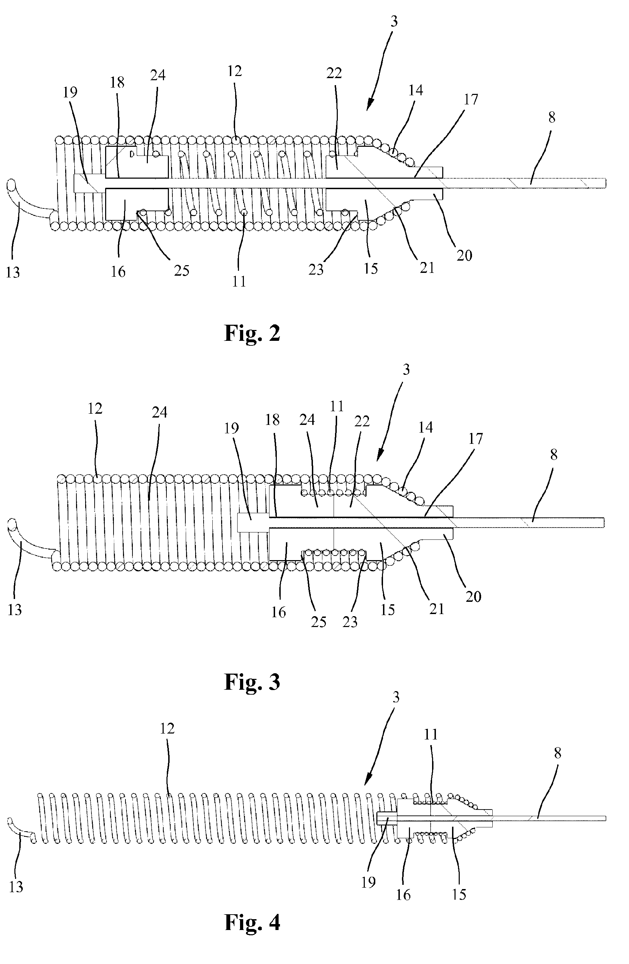

In den Figuren 2 bis 4 ist die Vorspannfeder 3 zur Vorspannung der Striegelzinken 2 in verschiedenen Stellungen dargestellt. Figur 2 zeigt die Vorspannfeder 3 in einer Vorspannstellung, bei der die Striegelzinken 2 noch nicht ausgelenkt sind. In den Figuren 3 und 4 ist die Vorspannfeder in zwei Auslenkstellungen eines Striegelzinkens 2 gezeigt.

Die Vorspannfeder 3 enthält eine als innere Druckfeder ausgebildete erste Feder 11 und eine als äußere Zugfeder ausgebildete, um die erste Feder 11 koaxial angeordnete zweite Feder 12, die derart hintereinandergeschaltet sind, dass beim Beginn der Auslenkung des Striegelzinkens 2 zunächst die erste Feder 11 und erst nach einer bestimmten größeren Auslenkung des Striegelzinkens 2 die zweite Feder 12 zur Wirkung gelangt. Hierzu weist die als äußere Schraubenzugfeder ausgebildete zweite Feder 12 an der einen Seite ein als Öse gebogenes Ende 13 zur Verbindung mit dem Striegelzinken 2 und an der anderen Seite ein konisch geformtes Ende 14 zur Halterung eines in der zweiten Feder 12 angeordneten ersten Führungsstücks 15 auf.

Zwischen dem an der zweiten Feder 12 festgelegten ersten Führungsstück 15 und einem innerhalb der zweiten Feder 12 beweglich angeordneten zweiten Führungsstück 16 ist die innerhalb der zweiten Feder 12 angeordnete erste Feder 11 eingespannt. Die erste Feder 11 ist bei der gezeigten Ausführung als Schraubendruckfeder ausgebildet. Die beiden Führungsstücke 15 und 16 sind als Drehteile mit jeweils einer zentralen Durchgangsbohrung 17 und 18 zur Durchführung des Zugsseils 8 ausgeführt. Das Zugseil 8 weist an seinem durch die Durchgangsbohrung 17 ragenden freien Ende eine Verdickung 19 zur Fixierung des Zugseils 8 am zweiten Führungsstück 16 auf.

Das erste Führungsstück 15 enthält einen gegenüber dem konischen Ende 14 der äußeren zweiten Feder 12 nach außen vorstehenden zylindrischen Führungszapfen 20, eine konische Anlagefläche 21 zur Anlage am konisch geformten Ende 14 der Zugfeder 11 und einen ersten zylindrischen inneren Aufnahmezapfen 22 mit einer ersten ringförmigen Anlagefläche 23 für das eine Ende der ersten Feder 11. Das zweite Führungsstück 16 weist einen zweiten zylindrischen inneren Aufnahmezapfen 24 mit einer zweiten ringförmigen Anlagefläche 25 für das andere Ende der ersten Feder 11 auf.

Wenn die Striegelzinken 2 aus einer in Figur 1 rechts dargestellten Anschlagstellung ausgelenkt werden, wird zunächst die innere erste Feder 11 zusammengedrückt. Erst wenn die beiden Führungsstücke 15 und 16 in einer vorgegebenen Auslenkstellung des Striegelzinkens 2 gemäß Figur 3 zum Anschlag gelangen, wirkt bei einer weiteren Auslenkung des Striegelzinkens 2 die äußere zweite Feder, die dann gemäß Figur 4 auseinandergezogen wird.

## Patentansprüche

1. Zinkenstriegel mit einem Traggestell (1) und mehreren am Traggestell (1) verschwenkbar angeordneten und über jeweils eine Vorspannfeder (3) gegen einen Anschlag (4) vorgespannten Striegelzinken (2), **dadurch gekennzeichnet, dass** die Vorspannfeder (3) zwei zusammengehörende Federn (11, 12) umfasst, die so hintereinandergeschaltet sind, dass beim Beginn der Auslenkung des Striegelzinkens (2) zunächst die erste Feder (11) und erst nach einer bestimmten größeren Auslenkung des Striegelzinkens (2) die zweite Feder (12) zur Wirkung gelangt, wobei die erste Feder (11) als Schraubendruckfeder und die zweite Feder (12) als koaxial um die erste Feder (11) angeordnete Schraubenzugfeder ausgebildet ist.

2. Zinkenstriegel nach Anspruch 1, **dadurch gekennzeichnet, dass** die erste Feder (11) mit einer geringeren Federsteifigkeit und die zweite Feder (12) mit einer größeren Federsteifigkeit ausgebildet ist.

3. Zinkenstriegel nach Anspruch 1 oder 2, **dadurch gekennzeichnet, dass** die erste Feder (11) zwischen einem an der zweiten Feder (12) festgelegten ersten Führungsstück (15) und einem gegenüber der zweiten Feder (12) beweglichen zweiten Führungsstück (16) eingespannt ist.

4. Zinkenstriegel nach Anspruch 3, **dadurch gekennzeichnet, dass** die zweite Feder (12) ein konisch geformtes Ende (14) zur Anlage einer konischen Anlagefläche (21) des ersten Führungsstücks (16) enthält.

5. Zinkenstriegel nach Anspruch 3 oder 4, **dadurch gekennzeichnet, dass** die beiden Führungsstücke (15, 16) zylindrische innere Aufnahmezapfen (22, 24) mit ringförmigen Anlageflächen (23, 25) für die erste Feder (11) enthalten.

6. Zinkenstriegel nach einem der Ansprüche 1 bis 5, **dadurch gekennzeichnet, dass** die zweite Feder (12) an ihrer einen Seite ein als Öse gebogenes Ende (13) zur Verbindung mit dem Striegelzinken (2) enthält.

7. Zinkenstriegel nach einem der Ansprüche 3 bis 6, **dadurch gekennzeichnet, dass** das zweite Führungsstück (16) mit einem Zugseil (8) zur Vorspannung verbunden ist.

8. Zinkenstriegel nach Anspruch 7, **dadurch gekennzeichnet, dass** die beiden Führungsstücke (15, 16) jeweils eine Durchgangsöffnung (17, 18) für das Zugseil (8) aufweisen und dass das Zugseil (8) an seinem durch die Durchgangsöffnung (18) des zweiten Führungsstücks (16) ragenden freien Ende eine Verdickung (19) zur Halterung des Zugseils (8) am Führungsstück (16) aufweist.

9. Zinkenstriegel nach einem der Ansprüche 7 oder 8, **dadurch gekennzeichnet, dass** das Zugseil (8) über eine elektrisch, pneumatisch oder hydraulisch angetriebene Verstellwelle (9) geführt ist.

## Claims

1. Tine harrow with a carrying frame (1) and a plurality of harrow tines (2) which are arranged pivotally on the carrying frame (1) and each preloaded by means of a preloading spring (3) against a stop (4), **characterised in that** the preloading spring (3) comprises two springs (11, 12) which belong together and are arranged one behind the other so that the first spring (11) is effective at first at the beginning of the deflection of the harrow tine (2) and the second spring (12) only becomes effective after a certain greater deflection of the harrow tine (2), the first spring (11) being embodied in the form of a compression coil spring and the second spring (12) being embodied in the form of tension coil spring arranged coaxially around the first spring (11).

2. Tine harrow according to claim 1, **characterised in that** the first spring (11) is formed with a lower spring stiffness and the second spring (12) is formed with a higher spring stiffness.

3. Tine harrow according to claim 1 or 2, **characterised in that** the first spring (11) is clamped between a first guide (15) fixed to the second spring (12), and a second guide (16) which is able to move in relation to the second spring (12).

4. Tine harrow according to claim 3, **characterised in that** the second spring (12) comprises a conically shaped end (14) for bearing of a conical bearing face (21) of the first guide (16).

5. Tine harrow according to claim 3 or 4, **characterised in that** the two guides (15, 16) comprise cylindrical inner receiving pins (22, 24) with ring-shaped bearing faces (23, 25) for the first spring (11).

6. Tine harrow according to one of claims 1 to 5, **characterised in that** the second spring (12) comprises on one side a curved end (13) in the form of an eye for connection with the harrow tine (2).

7. Tine harrow according to one of claims 3 to 6, **characterised in that** the second guide (16) is connected with a traction cable (8) for the preloading.

8. Tine harrow according to claim 7, **characterised in that** the two guides (15, 16) each have a through-opening (17, 18) for the traction cable (8) and **in that** at its free end protruding through the through-opening (18) of the second guide (16) the traction cable (8) has a thicker part (19) for attaching the traction cable (8) to the guide (16).

9. Tine harrow according to one of claims 7 or 8, **characterised in that** the traction cable (8) is controlled by means of an adjusting shaft (9) which is driven electrically, pneumatically or hydraulically.

## Revendications

1. Herse à pointes comprenant un châssis de support (1) et plusieurs pointes de herse (2) disposées de manière à pouvoir pivoter au niveau du châssis de support (1) et précontraintes par l'intermédiaire de respectivement un ressort de précontrainte (3) contre une butée (4), **caractérisée en ce que** le ressort de précontrainte (3) comprend deux ressorts (11, 12) associés, qui sont montés l'un derrière l'autre de telle sorte qu'au début de la déviation de la pointe de herse (2), d'abord le premier ressort (11) puis, seulement après une déviation définie plus importante de la pointe de herse (2), le second ressort (2) produisent leur effet, dans laquelle le premier ressort (11) est réalisé sous la forme d'un ressort hélicoïdal de pression et le second ressort (12) est réalisé sous la forme d'un ressort hélicoïdal de traction disposé de manière coaxiale autour du premier ressort (11).

2. Herse à pointes selon la revendication 1, **caractérisée en ce que** le premier ressort (11) est réalisé avec une rigidité de ressort inférieure et le second ressort (12) est réalisé avec une rigidité de ressort plus importante.

3. Herse à pointes selon la revendication 1 ou 2, **caractérisée en ce que** le premier ressort (11) est enserré entre une première pièce de guidage (15) fixée au niveau du second ressort (12) et une deuxième pièce de guidage (16) mobile par rapport au second ressort (12).

4. Herse à pointes selon la revendication 3, **caractérisée en ce que** le second ressort (12) contient une extrémité (14) formée de manière conique aux fins de l'appui d'une surface d'appui (21) conique de la première pièce de guidage (16).

5. Herse à pointes selon la revendication 3 ou 4, **caractérisée en ce que** les deux pièces de guidage (15, 16) contiennent des tourillons de logement (22, 24) intérieurs cylindriques pourvus de surfaces d'appui (23, 25) de forme annulaire pour le premier ressort (11).

6. Herse à pointes selon l'une quelconque des revendications 1 à 5, **caractérisée en ce que** le second ressort (12) contient, au niveau de l'un de ses côtés, une extrémité (13) courbée sous la forme d'un oeillet, destinée à être reliée à la pointe de herse (2).

7. Herse à pointes selon l'une quelconque des revendications 3 à 6, **caractérisée en ce que** la deuxième pièce de guidage (16) est reliée à un câble de traction (8) aux fins de la précontrainte.

8. Herse à pointes selon la revendication 7, **caractérisée en ce que** les deux pièces de guidage (15, 16) présentent respectivement une ouverture de passage (17, 18) pour le câble de traction (8), et **en ce que** le câble de traction (8) présente, au niveau de son extrémité libre dépassant par l'ouverture de passage (18) de la deuxième pièce de guidage (16), une épaisseur (19) servant à supporter le câble de traction (8) au niveau de la pièce de guidage (16).

9. Herse à pointes selon l'une quelconque des revendications 7 ou 8, **caractérisée en ce que** le câble de traction (8) est guidé par l'intermédiaire d'un arbre d'ajustement (9) à entraînement électrique, pneumatique ou hydraulique.
